Europäisches Patentamt

European Patent Office

Office européen des brevets

(19)

(11) Publication number: **0 274 361 B1**

(12) **EUROPEAN PATENT SPECIFICATION**

(45) Date of publication of patent specification: **03.06.92**

(21) Application number: **87830391.6**

(22) Date of filing: **06.11.87**

(51) Int. Cl.⁵: **H02K 23/18**, B62D 5/04, H02K 23/66, H02K 23/68, H02K 49/08, H02K 23/60

(54) An electrically operated, electronically controlled power amplifier.

(30) Priority: **19.11.86 IT 4012686**

(43) Date of publication of application:
**13.07.88 Bulletin 88/28**

(45) Publication of the grant of the patent:
**03.06.92 Bulletin 92/23**

(84) Designated Contracting States:
**DE FR GB NL SE**

(56) References cited:
**DE-C- 681 826**
**GB-A- 2 161 030**
**GB-A- 2 161 031**
**US-A- 4 108 015**
**US-A- 4 308 480**

**PATENT ABSTRACTS OF JAPAN, vol. 8, no. 155 (E-256)[1592], 19th July 1984; & JP-A-59 56 839 (NIPPON DENSO K.K.) 02-04-1984**

(73) Proprietor: **Zanichelli, Giannino**
**Via Cadorna, 6/A**
**I-42043 Olmo di Gattatico (Reggio E)(IT)**

(72) Inventor: **Zanichelli, Giannino**
**Via Cadorna, 6/A**
**I-42043 Olmo di Gattatico (Reggio E.)(IT)**
Inventor: **Chiussi, Dino**
**Via L. Ariosto, 12**
**I-42028 Poviglio (Reggio E.)(IT)**

(74) Representative: **Lanzoni, Luciano**
**BUGNION S.p.A. Via Emilia Est, 25**
**I-41100 Modena(IT)**

## Description

The invention relates to a power amplifier featuring electrical operation and electronic control.

The prior art embraces hydraulic power amplifiers operated by a hydraulic pump which is switched in for the purpose of boosting power available at an output shaft, for example, as in the case of power assisted steering systems for motor vehicles.

Conventional power amplifiers are characterized by low efficiency and high cost, inasmuch as the need exists for a coupling arrangement between hydraulic pump and hydraulic motor, or an electric pump.

Accordingly, the object of the invention is that of embodying a power amplifier featuring considerably higher efficiency than those of the prior art.

The prior art embraces electrically operated power amplifiers, for example as disclosed in GB-A-2 161 031, comprising a rotor, an input shaft and an output shaft, a stator, a commutator and a brush holder.

The brushes supplying current to the rotor winding are fixed in such embodiments, however, and thus unable to rotate about the winding.

The brushes of the rotor winding are supplied with current in their turn by further brushes of which the holders are directly and regidly associated with the input shaft of the power amplifier. The brushes 22-23, 36-37 and 41-42 disclosed in GB-A-2 161 031 betray notable drawbacks in terms of wear and poor precision in response.

The prior art also embraces moving brush holders, but intended for quite different applications, for example as in JP-A-5 956 839 which relates to a starter motor designed to generate increased torque.

A further object of the power amplifier according to the invention is that it enables a notable reduction in assembly costs, compared to prior art embodiments having comparable performance characteristics, since no use is made of hydraulic components.

The stated objects and others besides are realized with an all-electric power amplifier as disclosed, which comprises a rotor, serving to generate a magnetic field with one or more sets of poles, associated with an input shaft, and an output shaft delivering the amplified power; a stator, incorporating a stator winding, designed to generate a magnetic field having the same number of poles as the rotor field; a commutator, turning as one with the rotor and exhibiting a plurality of conductive segments insulated one from the other and wired to the rotor winding, characterized in that it comprises a stationary outer ring fashioned from partly insulating material, and an annulus, breasted rotatably with the outer ring and capable of angular movement independently of the rotor output shaft, which carries one or more pairs of brushes wired to a direct or pulsating current power source.

The invention will now be described in detail, by way of example, with the aid of the accompanying drawings, in which:

fig 1 is a longitudinal section through the power amplifier;

fig 2 is the electrical diagram of the power supply circuit serving the power amplifier.

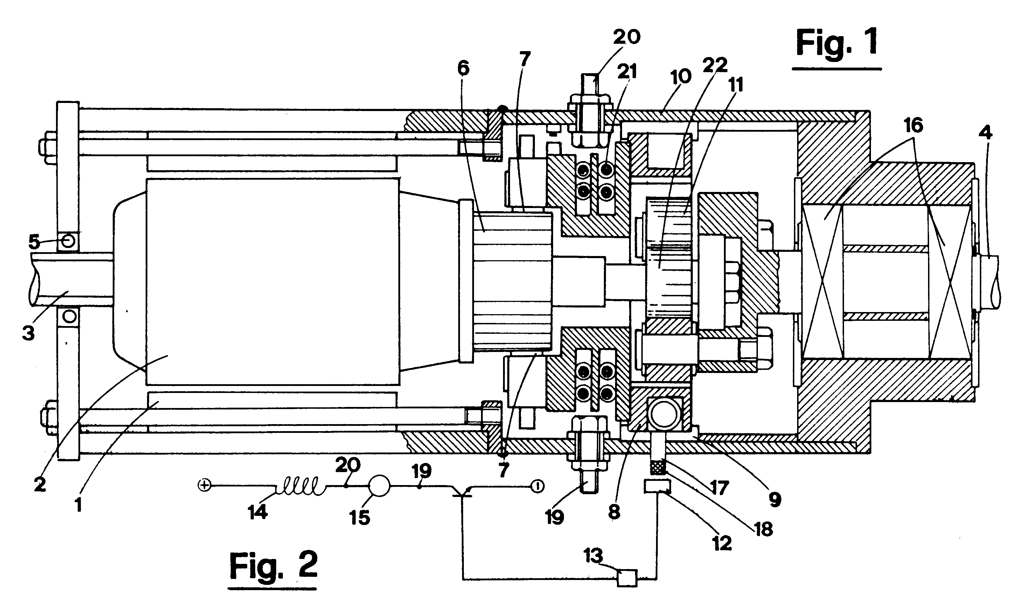

With reference first to fig 1, the power amplifier consists substantially in a stator 1, and a rotor 2 mounted internally of the stator.

The rotor 2 is associated with an output shaft 3 and an input shaft 4 both of which are journalled to the frame of the amplifier (5 denotes the output shaft bearing) and will incorporate a conventional winding (not illustrated) with one or more sets of poles, by which a magnetic field is generated.

6 denotes a commutator keyed to the output shaft 3 and exhibiting a given number of segments with which brushes 7 are brought into contact; the brushes 7 are mounted on a rotatable annulus 8 carried in a fixed outer ring 9 associated rigidly with the frame of the amplifier, which is denoted 10. The annulus 8 forms part of an epicyclic train of gears 11 set in motion by the input shaft 4, which turns in bearings denoted 16.

The annulus 8 also carries a projecting arm 17 with a magnet 18 fitted to its outer end, the proximity of which is sensed by an external transducer 12.

It will be observed from fig 2 that this external transducer 12 pilots the operation of a voltage and current regulator 13 in such a way as to increase the intensity of the stator and rotor fields when one has a movement away from the at-rest position.

14 and 15 respectively denote the stator and rotor windings; in an alternative embodiment, the stator winding 14 might be dispensed with and replaced by permanent magnets.

19 and 20 denote two power supply terminals serving the rotor winding; these are each wired to a spiral element 21 by which angular movement of some 90° is permitted to the brushes 7.

22 denotes a pinion keyed to the output shaft 3 at a point adjacent to the commutator, which constitutes the sun member of the epicyclic gear train 11.

Operation of the power amplifier disclosed will now be described.

With a driving torque applied to the input shaft 4, the brushes 7 will rotate in relation to the stator, assuming a position in which torque can be generated electromagnetically in the rotor, in the selfsame direction of rotation as that already established; more exactly, direct or pulsating current generated by way of the transducer 12 and regulator 13 is sent through the rotor and stator, setting up a magnetic field and generating torque, whereupon the rotor is set in motion, and a steady state established.

With suitable current generated by the power source, the torque ultimately produced at the output shaft 3 will be considerably higher than that applied at the input shaft 4.

Accordingly, with the output shaft 3 set in rotation in this way, output torque available will clearly be a function of the intensity of current supplied to the rotor winding, and to the stator, if wound.

With the driving force removed from the input shaft, rotation of the output stage is sustained initially, as a result of the torque generated between rotor and stator, though the rotor, brushes and transducer are then returned to the at-rest position by virtue of their independent rotary movement, obtained with the epicyclic link between pinion 22 and annulus 8.

The input and output shafts may rotate at the same speed or at different speeds; also, the stator might be of permanent magnet type embodiment, in which case current would flow through the rotor only.

Similarly, the number of poles of the rotor and the stator windings might be varied at will, and the number of commutator segments selected accordingly.

## Claims

1.  An electrically operated, electronically controlled power amplifier, comprising :
    - a rotor (2), serving to generate a magnetic field with one or more sets of poles, associated with an input shaft (4), and an output shaft (3) delivering the amplified power;
    - a stator (1), incorporating a stator winding and designed to generate a magnetic field having the same number of poles as the rotor field;
    - a commutator (6), turning as one with the rotor, and exhibiting a plurality of conductive segments insulated one from the other and wired to the rotor winding, characterized in that it comprises a stationary outer ring (9) fashioned from partly insulating material, and an annulus (8), breasted rotatably with the outer ring and capable of angular movement independently of the rotor output shaft, which carries one or more pairs of brushes (7) wired to a direct or pulsating current power source.

2.  Amplifier as in claim 1, wherein the annulus (8) carries a projecting arm (17) designed to trigger the operation of a transducer (12) which pilots an adjustment of the current supplied to the winding of the rotor, and of the stator, if wound.

3.  Amplifier as in claim 1, wherein the power source supplying the brushes comprises means (13) by which to regulate the intensity of current flowing from the source.

4.  Amplifier as in claim 1, wherein the annulus (8) meshes with a train of gears (11) set in motion by the input shaft (4), the same train of gears is also connected to the output shaft (3), and the angular movement of the annulus occurs as a result of the difference in speed between the two shafts created by the transmission ratio of the gears.

## Revendications

1.  Un amplificateur de puissance électrique-électronique caractérisé en ce fait qu'il comprend: un rotor (2) à même d'engendrer un champ magnétique à une ou plusieurs paires de pôles muni d'un arbre d'entrée (4) et d'un arbre de sortie (3) de la puissance amplifiée; un ester (1) muni d'un enroulement statorique à même d'engendrer un champ magnétique ayant le même nombre de pôles que le champ magnétique rotorique; un collecteur (6) solidaire du rotor et portant une pluralité de lamelles conductrices isolées entre elles et reliées électriquement à l'enroulement rotorique, caractérisé en ce fait qu'il comprend un anneau (9) extérieur stationnaire, en matériel partiellement isolant, et une couronne (8) à l'intérieur de l'anneau extérieur, à mouvement angulaire indépendant de l'arbre de sortie du rotor, qui porte une ou plusieurs pairs de brosses (7) reliées électriquement à un circuit d'alimentation à courant continu ou pulsatoirs.

2.  Un amplificateur comme celui de la revendication 1, caractérisé en ce fait que l'anneau comprend un bras mécanique (17) qui cause l'intervention d'un capteur (12) qui influe sur le réglage du courant d'alimentation de l'enroulement rotorique, et, éventuellement, de l'enroulement statorique.

3.  Un amplificateur comme celui de la revendication 1, caractérisé en ce fait que le circuit d'alimentation des brosses comprend des moyens (13) pour régler l'intensité du courant du circuit même.

**4.** Un amplificateur comme celui de la revendication 1, caractérisé en ce fait que la couronne (8) s'engage avec un groupe d'engrenages (11) mis en marche par l'arbre d'entrée (4); le dit groupe d'engrenages, est aussi relié mécaniquement avec l'arbre de sortie (3), et la rotation angulaire de la couronne est le résultat de la différence de vitesse entre les deux arbres créée par la vitesse de transmission, du groupe d'engrenages.

**Patentansprüche**

**1.** Elektrisch-elektronischer Kraftverstärker, dadurch gekennzeichnet, daß er aus den folgenden Teilen besteht:
einem Rotor, der mit einem oder mehreren Paaren von Polen versehen ist und zur Erzeugung eines Magnetfeld dient. Er ist mit einer Eintrittswelle und einer Ausgangswelle für die verstärke Kraft verbunden; einem mit statorischer Wicklung zur Erzeugung eines Magnetfelds versehenen Stator, der die gleiche Polenzahl des laufenden Magnetfeldes besitzt; einem mit dem Rotor einteiligen Kommutator. Der Kommutator ist mit einer Pluralität von leitenden, von einander isolierten und elektrisch mit der rotorischen Wicklung verbundenen Segmenten ausgestattet; aus einem Ring, der aus partiell isolierendem Werkstoff besteht; aus einem Paar Von Bürsten, die elektrisch an einen mit Gleichstrom oder pulsierendem Strom gespeisten Versorgungskreis angeschlossen (verbunden) sind.

**2.** Kraftverstärker nach dem Patentanspruch 1 dadurch gekennzeichnet, daß der Ring einen mechanischen Arm (17) beinhaltet, der die Einwirkung des Sensors (12) varanlaßt, welcher auf die Regulierung der Stromzufuhr der rotorischen und evtl. statorischen Wicklung einwirkt.

**3.** Kraftverstärker nach Patentanspruch 1 dadurch gekennzeichnet, daß der Versorgungskreis der Bürsten Bauteile (13) beinhaltet, die zur Regulierung der Stromstärke der Schaltung dienen.

**4.** Kraftverstärker nach dem Patentanspruch 1 dadurch gekennzeichnet, daß die Krone (8) in eine Gruppe Von Zahnrädern, die von der Eintrittswelle (4) in Bewegung gesetzt wird, einrastet; mit dieser Gruppe von Zahnrädern besteht eine mechanische Verbindung mit der Austrittswelle und es ist eine unterschiedliche Rotation der beiden Wellen vorgesehen; gemäß einer gewissen übertragung entsprechend der Zahnradgruppe wird die eckige Rotation der Krone bestimmt.

Fig. 1

Fig. 2